# EUROPÄISCHE PATENTANMELDUNG

(11) **EP 0 706 293 A2**
(43) Veröffentlichungstag der Anmeldung: **10.04.1996**
(21) Anmeldenummer: 95115476.4
(22) Anmeldetag: 29.09.1995
(51) Int. Cl.: H04N 7/173

(54) **Hausnetz zur Verteilung von Video- und/oder Audiosignalen und zur zusätzlichen bidirektionalen Übertragung teilnehmerbezogener Signale**

(30) Priorität: 06.10.1994 DE 4435766
(71) Anmelder: SIEMENS AKTIENGESELLSCHAFT, D-80333 München (DE)
(72) Erfinder: Neidlinger, Stephan, Dr.-Ing., D-80807 München (DE)

(57) **Zusammenfassung**

Koaxialkabel-Fernsehverteilnetze sollen in Zukunft durch die bidirektionale Übertragung teilnehmerbezogener Signale z.B. für interaktives Fernsehen ergänzt werden. Für die Übertragung solcher zusätzlichen Signale sind die Hausnetze zur Zeit noch nicht eingerichtet, erfindungsgemäß werden zwei Möglichkeiten zur Realisierung vorgeschlagen, bei denen die Netzabschlußeinrichtungen entweder beim einzelnen Teilnehmer oder am Übergabepunkt der Signale im Haus angeordnet sind.

## Beschreibung

Die Erfindung betrifft ein Hausnetz entsprechend dem Oberbegriff des Anspruchs 1.

Die bestehenden Netze zur Verteilung von Video und/oder Audiosignalen über Koaxialkabel bis zum Teilnehmer sollen in der Zukunft auch zur Übertragung teilnehmerbezogener digitaler Signale dienen, die zur Versorgung neuer breitbandiger, sogenannter interaktiver Dienste, dienen. Beispiele solcher interaktiver Dienste sind Video-auf- Abruf, Teleshopping und Multi-Media-Anwendungen. Hierbei müssen neben den Signalen von einer Zentrale zu den Teilnehmern auch Signale von den Teilnehmern zur Zentrale übertragen werden. Ein Problem bei der Übertragung derartiger Signale stellt das derzeitige Hausnetz insbesondere in Mehrfamilienhäusern dar, da dieses Hausnetz im allgemeinen als aktives Netz unter Einsatz von Verstärkern für einzelne Frequenzbereiche aufgebaut ist und damit für eine breitbandige bidirektionale Übertragung nicht geeignet ist.

Die Aufgabe bei der vorliegenden Erfindung besteht also darin, das Hausnetz der eingangs erwähnten Art so weiter zu entwickeln, daß auch die bidirektionale Übertragung breitbandiger digitaler Signale zwischen den Teilnehmern und einem Übergabepunkt, der den Anschluß zum zur Zentrale führenden Koaxialkabelnetz darstellt, möglich ist.

Erfindungsgemäß wird die Aufgabe durch ein Hausnetz der eingangs erwähnten Art gelöst, das entsprechend dem Kennzeichen des Patentanspruchs 1 weitergebildet ist. Die Erfindung geht dabei von der Erkenntnis aus, daß die heutigen Koaxialkabelnetze zur Verteilung von analogen Video und/oder Audiosignalen nur bis zu etwa 500 MHz belegt sind, die modernen Koaxialkabel und auch die angeschlossenen Übertragungseinrichtungen aber für digitale Signale nutzbare Bandbreiten bis zu etwa 850 MHz aufweisen.

Die im Anspruch 2 beschriebene bevorzugte Ausbildung des erfindungsgemäßen Hausnetzes bietet in vorteilhafter Weise die Möglichkeit, ein einheitliches Übertragungsverfahren von der Zentrale bis zum Teilnehmer verwenden zu können, so daß keine zusätzlichen Verluste und Störungen durch ein- oder mehrfachen Wechsel der Modulationsverfahren auftreten können und wegen der kurzen Anschlußlänge eine einfache Anschlußtechnik der Endgeräte an die Netzabschlußeinrichtungen möglich ist.

Eine wegen der Entkopplung zwischen dem Hausnetz und dem öffentlichen Netz bevorzugte Weiterbildung des erfindungsgemäßen Hausnetzes, entsprechend Anspruch 3 bietet außerdem den Vorteil, daß kein breitbandiges bidirektionales Koaxialkabel-Hausnetz notwendig ist, da ein schmalbandiger Rückkanal vom Teilnehmer in vielen Fällen bereits vorhanden ist.

Zweckmäßige Weiterbildungen des erfindungsgemäßen Hausnetzes sind in den Ansprüchen 4 und 5 beschrieben.

Die Erfindung soll im folgenden anhand von in der Zeichnung dargestellten Ausführungsbeispielen näher erläutert werden.

Dabei zeigt:
- Figur 1: ein Hausnetz mit einer Netzabschlußeinrichtung beim Teilnehmer und
- Figur 2: ein Hausnetz mit einer Netzabschlußeinrichtung am Übergabepunkt.

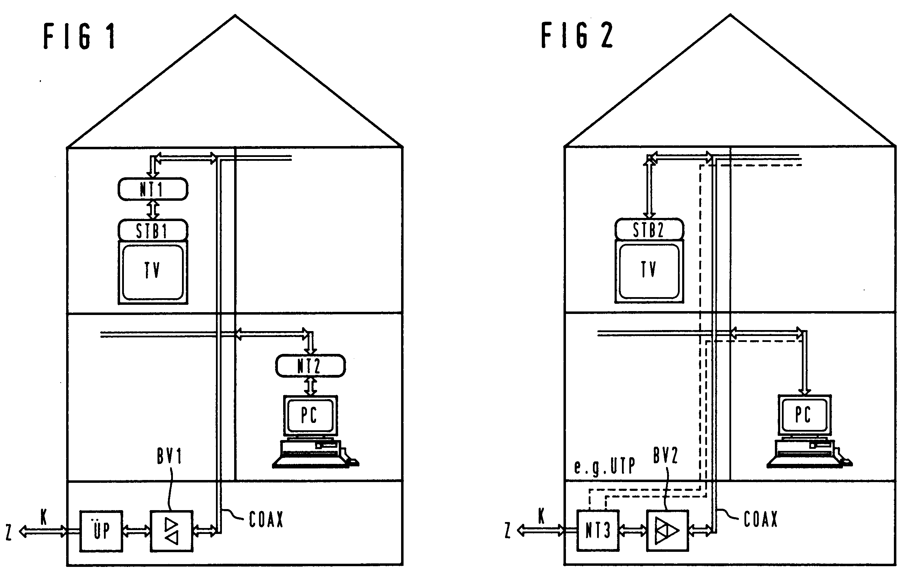

In der Figur 1 sind die Netzabschlußeinrichtungen NT1, NT2 beim jeweiligen Teilnehmer angeordnet, Voraussetzung hierfür ist ein Koaxialkabel-Hausnetz mit einer Bandbreite von etwa 50 bis etwa 860 MHz, das für breitbandige bidirektionale Übertragungsverfahren geeignet ist. Der Übergabepunkt ÜP zwischen dem zur Zentrale Z führenden Koaxialkabel und dem Koaxialkabel-Hausnetz ist beim Ausführungsbeispiel im Gebäude angeordnet, er könnte auch für mehrere Gebäude gemeinsam, vor dem Gebäude beispielsweise in einem Bauschacht angeordnet sein.
Der Übergabepunkt ÜP stellt die Grenze zwischen dem öffentlichen Koaxialkabel-Netz und dem Hausnetz dar, er kann gleichzeitig Anschlußstelle für eine Fernspeiseeinrichtung sein, die die im Koaxialkabel-Hausnetz vorhandenen aktiven Einrichtungen, also insbesondere bidirektionale Verstärker und Netzabschlußeinrichtungen mit Strom versorgt. An den Übergabepunkt ÜP schließt sich im Hausnetz ein erster bidirektionaler Verstärker BV1 an, der die von der Zentrale ausgesendeten und am Übergabepunkt ÜP nicht veränderten Signale verstärkt. Vom Ausgang des ersten bidirektionalen Verstärkers BV1 werden die verstärkten Signale über das Koaxialkabel-Hausnetz einer ersten und einer zweiten Netzabschlußeinrichtung NT1, NT2 zugeführt und dort so demoduliert bzw. dekodiert, daß die Signale in einer Set-Top-Box STB1 weiterverarbeitet werden können. Derartige Set-Top-Boxen sind in der "Funkschau", 18/1994, Seiten 72 und 73 beschrieben, diese Set-Top-Boxen enthalten neben Demodulatoren und Decodierern auch einen Rechner und ein angeschlossenes Bedienfeld, durch das beispielsweise Video-Auf-Abruf oder Teleshopping ausgeführt werden kann.
Für den Anschluß eines Personalcomputers PC ist beim Ausführungsbeispiel eine zweite Netzabschlußeinrichtung NT2 vorgesehen, die Set-Top-Box entfällt in diesem Falle, da bereits der Personalcomputer PC über geeignete Signalverarbeitungseinrichtungen verfügt.
Der einfache Aufbau des Hausnetzes nach der Figur 1 führt wegen der kurzen Anschlußlänge zu einer einfachen Anschlußtechnik der Endgeräte, also des Fernsehgerätes und des Personalcomputers, auch ist ein einheitliches Übertragungsverfahren von der Zentrale bis zum Teilnehmer von Vorteil, da keine zusätzlichen Verluste durch ein- oder mehrfachen Wechsel der Modulationsverfahren oder zusätzliche Multiplexer- und Demultiplexer erforderlich sind. Das Koaxialkabel-Hausnetz muß aber bestimmte Anforderungen hinsichtlich der Reflektionsunterdrückung und der Schirmung gegen störende Einstrahlungen erfüllen, auch ergeben sich hohe Ansprüche an den ersten bidirektionalen Verstärker BV1.

In der Figur 2 ist für das Hausnetz eine einheitliche dritte Netzabschlußeinrichtung NT3 vorgesehen, die am Übergabepunkt ÜP angeordnet ist. Eine derartige Anordnung bietet Vorteile für das an die Zentrale Z angeschlossene Koaxialkabel-Verteilnetz, da dieses definiert abgeschlossen ist und durch Veränderungen und Störungen des Hausnetzes nicht beeinflußt werden kann. Gegenüber der ersten und der zweiten Netzabschlußeinrichtung NT1, NT2 ist in der dritten Netzabschlußeinrichtung NT3 zusätzlich eine Kombination aus einem Demodulator und einem Modulator vorgesehen, durch den die von der Zentrale Z ausgesendeten Signale in solche umgeformt werden, die durch die zweite Set-Top-Box STB2 bzw. den Personalcomputer PC direkt verarbeitet werden können. Die im Hausnetz übertragenen Signale weisen deshalb eine Form auf, wie sie auch für die Übertragung digitaler Video- und/oder Audio-Signale über Satellit bzw. in Kabelverteilnetzen für Fernsehsignale, sogenannten CATV-Netzen, vorgesehen sind. Bei der Übertragung digitaler Signale kann außerdem eine Redundanzverringerung vorgenommen werden, so daß z.B. 6 bis 8 digitale Fernsehsignale in einem 8-MHz-Kanal übertragen werden können. Im Hinblick auf die weitergehende Integration derartiger Geräte ist es auch möglich, die beispielsweise in der zweiten Set-Top-Box STB2 enthaltenen Demodulatoren und Demultiplexer in die Schaltung für den Fernsehempfänger mit zu integrieren. Die vom Teilnehmer ausgehenden Signale betreffen insbesondere Wählsignale für bestimmte Programme bzw. Datensignale vom Personalcomputer PC und Teleshoppingsignale und gegebenenfalls auch ISDN-Signale, alle diese Signale sind vergleichsweise schmalbandig, so daß eine Übertragung dieser Signale im Frequenzband unterhalb des für die Verteilung der Video- und/oder Audiosignale vorgesehenen Frequenzbereichs möglich ist. Wegen der vergleichsweise geringen Dämpfung in diesem Bereich ist eine Verstärkung dieser Signale bis zur dritten Netzabschlußeinrichtung NT3 nicht erforderlich, der zweite bidirektionale Verstärker BV2 verstärkt deshalb nur die von der dritten Netzabschlußeinrichtung NT3 erzeugten Signale und stellt für die Signale der Gegenrichtung nur eine Weiche dar.

Eine Alternative zur Übertragung der breitbandigen bidirektionalen Signale ist die in der Figur 2 angedeutete Verwendung von ungeschirmten verdrillten Kupferaderpaaren UTP. Es hat sich gezeigt, daß über derartige ungeschirmte Kupferleitungen über kurze Strecken breitbandige digitale Signale mit einer Bitrate von etwa 50 MBit/s mit ausreichender Störsicherheit übertragen werden können. Damit kann das an sich erforderliche bidirektionalen Koaxialkabel-Hausnetzes bei dieser Variante entfallen, auch ein schmalbandiger Rückweg durch im Hause verlegte Leitungen ist häufig bereits vorhanden.

## Patentansprüche

1. Hausnetz zur Verteilung von Video- und/oder Audiosignalen, bei dem Koaxialkabel über einen im oder am Haus befindlichen Übergabepunkt bis zum Teilnehmer geführt sind,
**dadurch gekennzeichnet,**
daß zur zusätzlichen bidirektionalen Übertragung teilnehmerbezogener digitaler Signale diese trägerfrequent wenigstens zum überwiegenden Teil in einem Frequenzbereich oberhalb dem der Video- und/oder Audiosignale vom Übergabepunkt zum Teilnehmer übertragen werden,
daß dem Übergabepunkt (ÜP) in Richtung zum Teilnehmer ein bidirektionaler Verstärker (BV) und diesem wenigstens eine Netzabschlußeinrichtung (NT) nachgeschaltet sind und daß einzelne Geräte des Teilnehmers über eine Set-Top-Box (STB) an das Koaxialkabel angeschlossen sind.

2. Hausnetz nach Anspruch 1,
**dadurch gekennzeichnet,**
daß die Netzabschlußeinrichtungen (NT) beim Teilnehmer angeordnet sind und an diese die Set-Top-Boxen (STB) angeschlossen sind.

3. Hausnetz nach Anspruch 1,
**dadurch gekennzeichnet,**
daß die Netzabschlußeinrichtung (NT) am Übergabepunkt (ÜP) angeordnet und dem bidirektionalen Verstärker (BV) vorgeschaltet ist.

4. Hausnetz nach Anspruch 3,
**dadurch gekennzeichnet,**
daß für die Übertragung der teilnehmerbezogenen Signale zwischen den Netzabschlußeinrichtungen (NT) und den Set-Top-Boxen (STB) die gleichen Verfahren verwendet werden, die auch für die Übertragung digitaler Video- und/oder Audiosignale über Satellit bzw. in CATV-Netzen vorgesehen sind.

5. Hausnetz nach Anspruch 1,
**dadurch gekennzeichnet,**
daß zusätzliche teilnehmerbezogene Schmalbandsignale zwischen den Netzabschlußeinrichtungen (NT) und den Set-Top-Boxen (STB) unterhalb des für die Verteilung der Video- und/oder Audiosignale vorgesehenen Frequenzbereichs übertragen werden.

6. Hausnetz nach Ansprüchen 1 bis 5,
**dadurch gekennzeichnet,**
daß das Koaxialkabel durch ein ungeschirmtes verdrilltes Kupferaderpaar (UTP) wenigstens teilweise ersetzt ist.
